# FASCICULE DE BREVET EUROPEEN

(11) **EP 1 769 954 B1**
(45) Date de publication et mention de la délivrance du brevet: **05.08.2009**
(21) Numéro de dépôt: 06121589.3
(22) Date de dépôt: 29.09.2006
(51) Int. Cl.: B60J 3/02, B60J 1/20

(54) **Palettes pare-soleil pour pare-brise de véhicule automobile, à store à enrouleur, et véhicule automobile correspondant**
Sonnenblendenvorrichtung für eine Fahrzeugwindschutzscheibe, mit einem Rollo, und entsprechendes Fahrzeug
Sun visor device for a vehicle's windshield, with a roller blind, and corresponding vehicle

(30) Priorité: 30.09.2005 FR 0510040; 02.05.2006 FR 0603915
(43) Date de publication de la demande: 04.04.2007
(73) Titulaire: Wagon SAS, 79302 Bressuire Cédex (FR)
(72) Inventeur: Fourel, Pascal, 35400, Saint Malo (FR)
(74) Mandataire: Bioret, Ludovic

(56) Documents cités:
- AU-A- 4 673 179
- FR-A- 2 504 070
- US-A- 2 747 927
- US-A- 5 653 278

## Description

### 1. Domaine de l'invention

Le domaine de l'invention est celui des véhicules automobiles, et plus précisément de la protection des occupants d'un tel véhicule contre l'éblouissement dû au soleil.

Plus précisément encore, l'invention concerne une palette pare-soleil pour pare-brise de vehicule automobile selon le préambule de la revendication 1. .

### 2. Art antérieur

Une palette du type du préambule de la revendication 1 est connue de AU 4673179.

La plupart des véhicules automobiles sont équipés de palettes pare-soleil pour protéger le conducteur et le cas échéant son passager des rayons de soleil pouvant frapper la partie supérieure du pare-brise. Généralement, ces palettes sont réalisées sous la forme d'un panneau plein mobile entre une position rabattue, le long du pavillon et une position active, ramené le long du pare-brise, ou sensiblement verticalement.

Souvent, les palettes pare-soleil sont également montées sur rotule, pour pouvoir être déplacées le long d'une vitre latérale.

Les palettes pare-soleil peuvent par ailleurs offrir des fonctions annexes, et par exemple porter un miroir de courtoisie, ou une fiche d'information.

### 3. Inconvénients de l'art antérieur

Ces palettes pare-soleil de type connu présentent l'inconvénient d'être de taille fixe. Dans certains cas, notamment lorsque le soleil est bas, elles protègent de façon insuffisante.

Il serait souhaitable d'obtenir une meilleure protection, au moins lorsqu'elles sont utilisées le long d'une vitre latérale.

Elles sont par ailleurs mal adaptées à certains véhicules actuellement développés, qui présentent une grande surface vitrée, soit parce que le pare-brise se prolonge sur une partie du pavillon, soit parce que le pavillon lui-même est vitré. Dans ce cas, le pare-soleil classique n'occulte qu'une portion limitée de la surface vitrée, et ne sert pratiquement à rien.

On a d'ailleurs, dans ce cas, développé des dispositifs de store à enrouleur pour pallier cet inconvénient. Mais cette technique, si elle s'avère efficace, ne remplace pas une palette pare-soleil. Le store ne se déploie que selon un seul plan, alors que la palette peut être déplacée selon deux directions au moins, pour obtenir un positionnement précis, par exemple le long du pare-brise ou de la vitre latérale, en fonction des besoins.

Par ailleurs, l'installation d'un store à enrouleur classique à la place d'une palette pare-soleil est difficilement envisageable, en particulier si l'espace est essentiellement vitré.

### 4. Objectifs de l'invention

L'invention a notamment pour objectif de pallier ces inconvénients de l'art antérieur.

Plus précisément, un objectif de l'invention est de fournir une palette pare-soleil qui conserve ces caractéristiques classiques, tout en permettant une occultation de meilleure qualité, lorsque cela est nécessaire. Par meilleure qualité, on entend ici notamment une meilleure couverture d'une zone à occulter en fonction des besoins de l'utilisateur.

Un autre objectif de l'invention est de fournir une telle technique, qui soit adaptée à des véhicules présentant une grande surface vitrée, et par exemple aux véhicules équipés d'un pavillon vitré.

Un autre objectif de l'invention est de fournir une telle technique qui soit simple à mettre en oeuvre, et à utiliser.

### 5. Exposé de l'invention

Ces objectifs, ainsi que d'autres qui apparaîtront par la suite, sont atteints à l'aide d'une palette pare-soleil pour pare-brise de véhicule automobile comprenant un store à enrouleur, comprenant une toile d'occultation montée sur un tube enrouleur logé dans une cassette et entraîné par une barre de tirage.

Ladite cassette et ladite barre de tirage sont des formes adaptées, selon l'invention, conçues de façon à s'emboîter l'une dans l'autre pour former une palette pare-soleil minimale, lorsque ladite toile est repliée.

Ainsi, selon l'invention, on combine les avantages d'une palette pare-soleil classique et d'un store à enrouleur, tout en supprimant leurs inconvénients respectifs. En effet, lorsque la toile d'occultation est repliée, on dispose d'une palette pare-soleil classique, formée par le regroupement de la cassette et de la barre de tirage, qui ont été définies de façon adaptée.

Cette palette pare-soleil est même plus pratique que les palettes connues, puisqu'elle peut être d'une taille réduite, tout en conservant les caractéristiques d'une palette (protection, support de fonction tel que le miroir de courtoisie, ...).

Lorsque la toile est dépliée, en partie ou complètement, on dispose d'une protection contre le soleil plus importante, qui peut par exemple occulter une grande partie, voire la totalité, d'une vitre latérale, tout en conservant la souplesse de réglage d'une palette pare-soleil, que n'offre pas un store à enrouleur classique.

Préférentiellement, la palette comprend des moyens d'équilibrage du déplacement de ladite barre de tirage, et en ce que ladite cassette et ladite barre de tirage définissent un logement pour lesdits moyens d'équilibrage, lorsque ladite toile est repliée.

Lesdits moyens d'équilibrage peuvent notamment comprendre deux compas, reliant chacun ladite barre de tirage à ladite cassette.

Selon un aspect avantageux, la palette comprend au moins un élément raidisseur élastique solidaire de ladite cassette et coopérant avec ladite barre de tirage de façon à retenir ladite barre lorsque ladite toile est déployée.

Ainsi, on prévient l'enroulement intempestif de la toile du store.

De façon préférentielle, la ou lesdits élément(s) raidisseur(s) élastique(s) est une lame ressort.

De façon avantageuse, ladite cassette peut être reliée audit véhicule par l'intermédiaire d'une rotule.

On dispose ainsi du réglage habituel dans deux directions d'une palette classique, auquel s' ajoute le réglage en longueur de la surface d'occultation.

Selon un mode de réalisation particulier de l'invention, ladite toile d'occultation est reliée par une extrémité au tube enrouleur et, par l'autre extrémité à par ses deux extrémités à ladite cassette, et circule autour d'un rouleau solidaire de ladite barre de tirage, de façon à présenter ladite toile en double épaisseur.

Il est ainsi possible de dissimuler simplement et efficacement le mécanisme constitué par exemple de compas et/ou de biellettes.

Selon un autre aspect avantageux de l'invention, ladite toile peut être déployée :
- sensiblement verticalement, pour occulter la partie supérieure dudit pare-brise ;
- sensiblement horizontalement, pour occulter une portion vitrée d'un pavillon.

Selon un autre mode de réalisation particulier de l'invention, la palette pare-soleil, dans une position de repos, peut être sensiblement affleurante à la traverse placée à l'avant du pavillon du véhicule et peut être déployée par pivotement vers l'avant dudit véhicule automobile.

Ainsi, lorsque la partie avant du pavillon du véhicule est partiellement vitrée, la palette pare-soleil ne masque pas cette surface vitrée en étant intégrée à la garniture du véhicule, ce qui améliore également l'aspect esthétique de l'intérieur de l'habitacle et réduit son encombrement apparent.

Selon encore un autre mode de réalisation particulier de l'invention, la palette pare-soleil, dans une position de repos, peut être également sensiblement affleurante à la traverse placée à l'avant du pavillon du véhicule et peut être déployée par pivotement vers l'arrière dudit véhicule automobile.

Ainsi, ce mode de réalisation partage les spécificités originales déclinées pour le mode de réalisation présenté ci-dessus. D'autre part, du fait du faible encombrement de la palette, celle-ci peut être déployée en la tirant vers l'avant, ce qui était jusqu'alors pas réalisable avec des pare-soleils de plus grande largeur sans déporter la position d'au moins un axe d'articulation de la palette vers l'arrière d'une distance au moins égale à celle même largeur et pouvait gêner l'occupant du véhicule.

L'invention concerne également les véhicules automobiles équipés d'au moins une palette pare-soleil telle que décrite ci-dessus.

### 6. Liste des figures

D'autres caractéristiques et avantages de l'invention apparaîtront à la lecture de la description suivante de modes de réalisation de l'invention, donnés à titre de simples exemples illustratifs et non limitatifs, et des dessins annexés parmi lesquels :
- les figures 1A et 1B illustrent un premier mode de réalisation de l'invention, respectivement lorsque le store est replié (figure 1A) et déployé (figure 1B) ;
- la figure 2 illustre, en coupe, le store de la figure 1B ;
- la figure 3A illustre une autre présentation de la palette en position repliée, dans laquelle la barre de tirage et la cassette sont emboîtées ;
- les figures 3B et 3C présentent une palette selon l'invention dont la barre de tirage est retenue par des éléments raidisseurs et élastiques placés respectivement dans le plan et perpendiculairement au plan de la toile du store ;
- la figure 4A illustre l'utilisation de la palette de l'invention en protection de pavillon ;
- les figures 4B à 4E et 4F à 4G illustrent deux modes de réalisation de l'invention selon lesquels la palette de l'invention est intégré dans la garniture de la traverse avant du pavillon et se déploie respectivement par pivotement vers l'avant ou l'arrière du véhicule ;
- la figure 5 est une vue en coupe d'un autre mode de réalisation de l'invention, selon lequel la toile d'occultation est doublée ;
- les figures 6A et 6B présentent un exemple d'apparence particulière du dispositif de la figure 5.

### 7. Description d'un mode de réalisation préférentiel

L'invention repose donc sur une nouvelle approche des palettes pare-soleil, selon laquelle on adjoint au dispositif un store à enrouleur, pour augmenter le cas échéant la surface occultée, tout en conservant les avantages d'une palette pare-soleil classique, et en particulier en fournissant une palette minimale, lorsque la toile de store est repliée.

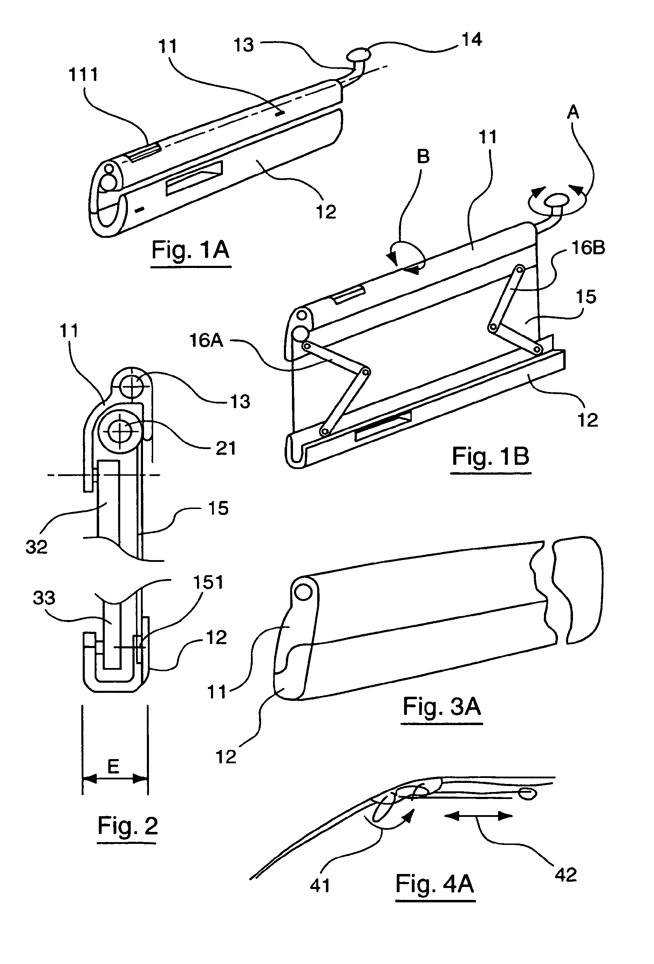

Les figures 1A et 1B illustrent un premier mode de réalisation de l'invention. Sur la figure 1A, la toile de store est repliée, alors qu'elle est dépliée (ou en cours de dépliement) sur la figure 1B.

Comme on le voit sur la figure 1A, en position repliée, le dispositif forme une palette de type classique, si ce n'est que sa hauteur est de dimension réduite. Elle peut par exemple s'étendre sur environ 60 mm, pour former une palette minimale. Bien entendu, si cela est souhaité, cette dimension peut être augmentée, par exemple pour que la palette soit de dimension similaire à une palette classique.

Cette palette est donc constituée de deux éléments ramenés en contact l'un avec l'autre pour former un tout :
- une cassette 11, portant un double enrouleur ;
- et une barre de tirage 12.

Les formes de cette cassette 11 et de cette barre de tirage 12 sont adaptées pour définir une palette.

La cassette 11 porte également une tige de fixation 13, se terminant par une rotule classique, permettant le déplacement de la palette selon au moins deux directions, comme illustré par les flèches A et B de la figure 1B.

Une ouverture 111 peut être ménagée dans la cassette pour permettre le clipage de la tige 13, de façon classique en soi.

La cassette et la barre de tirage sont également adaptées pour embarquer les fonctions optionnelles habituelles d'une palette pare-soleil, si nécessaire.

Selon l'invention, la zone couverte par la palette pare-soleil peut donc être augmentée par le déploiement d'une toile d'occultation 15, comme le montre la figure 1B. Selon les besoins, la longueur maximale de la toile peut être comprise par exemple entre 120 et 400 mm.

Des moyens d'équilibrage sont prévus, d'une part pour maintenir la toile dans la position dépliée choisie, et d'autre part pour contrôler que la barre de tirage 12 reste parallèle à la cassette 11.

Dans le mode de réalisation illustré en figure 1B, ces moyens comprennent deux compas 16A, 16B, formés chacun de deux biellettes.

La figure 2 illustre, en coupe, le mécanisme du dispositif de la figure 1B.

La cassette 11, réalisée par exemple en matière plastique, reçoit l'axe, ou la tige, 13, qui présente par exemple un diamètre de 6 mm. Elle porte par ailleurs le tube enrouleur 21 sur lequel est montée la toile 15.

L'autre extrémité de la toile 151 est solidarisée à la cassette 12.

Par ailleurs, la cassette 11 porte, par l'intermédiaire d'un axe permettant la rotation, une première extrémité de chaque biellette 32, dont la seconde extrémité est reliée de façon articulée à une première extrémité de la biellette 33, dont la seconde extrémité est solidaire de la barre de tirage 12, de façon à former les deux compas de maintien et de guidage.

A titre indicatif, l'épaisseur E du dispositif peut être comprise entre 8 et 10 mm.

Comme indiqué plus haut, en position repliée, le dispositif forme une palette minimale. Comme on le voit sur la figure 3A, la cassette 11 et la barre de tirage 12 peuvent sont conçues de façon à s'imbriquer, ou à s'emboîter, l'une dans l'autre.

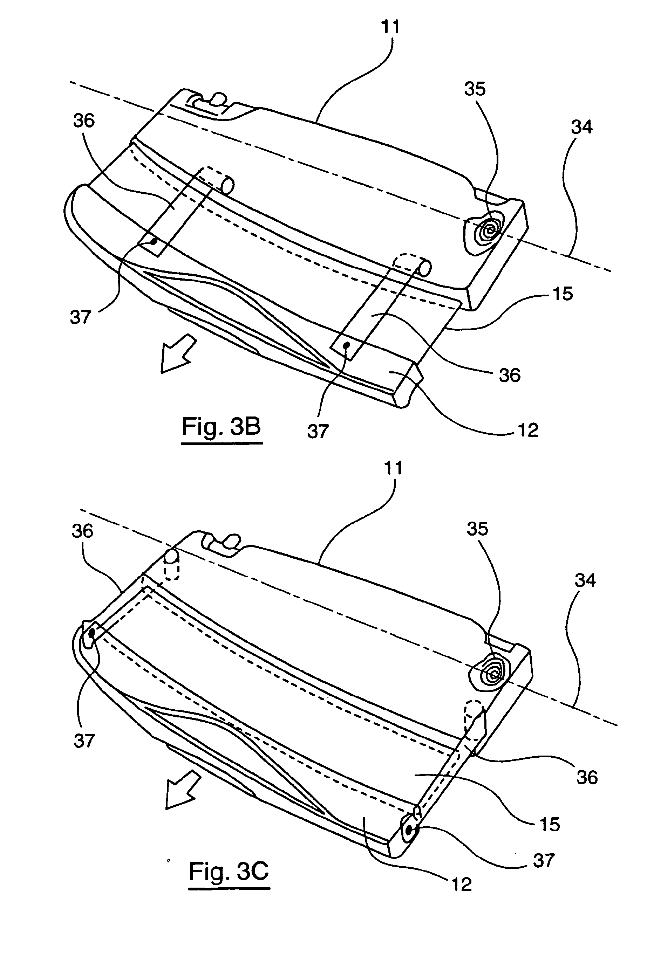

Dans un mode de réalisation particulier de l'invention, illustré figure 3B, le prolongement de l'axe 34 du tube enrouleur 21 (non représenté) est équipé d'un ressort de rappel 35 solidaire de la cassette 11 pour faciliter l'enroulement automatique de la toile 15, lorsque celle-ci est libérée et la maintenir tendue en position déployée. Ce ressort est par exemple de type spiral.

Dans ce mode de réalisation de l'invention, deux éléments raidisseurs élastiques 36, encore appelés lames ressort, fixés à la cassette 11, maintiennent avantageusement la barre de tirage 12 dans une position déployée prédéterminée, de façon à s'opposer au glissement de la toile 15 et de la barre de tirage 12 dans le sens de l'enroulement, sous l'effet de la tension du ressort de rappel 35.

Le maintien est réalisé en insérant des saillies 37 et/ou picots prévues sur la surface des lames 36 dans des évidements correspondants de la face latérale externe de la barre de tirage 12.

La surface des éléments raidisseurs 36 est sensiblement alignée avec cette face de la barre de tirage 12. Lorsque la barre de tirage 12 est déplacée entre la position déployée et la position repliée, et tant que la saillie 37 ne se trouve pas en correspondance avec l'évidemment (toile en position déployée), la lame est donc repoussée et fléchie du fait de son élasticité.

Les éléments raidisseurs 36 peuvent être montés dans une variante de ce mode de réalisation sur les bords latéraux de la cassette 11 de façon à rester perpendiculaires à la surface de toile 15 déployée, comme présenté figure 3C. Dans ce cas, les lames 36 assurent également une fonction secondaire de finition en masquant les bords de la toile et/ou forment une paroi structurelle.

Une pluralité de saillies 37, préférentiellement espacées d'une distance supérieure à la hauteur de la barre de tirage, peuvent être prévues sur la surface de la lame ressort afin de pouvoir maintenir le store dans des positions intermédiaires entre les positions repliée et déployée.

En outre on prévoit avantageusement une butée pour éviter que la barre de tirage ne soit déplacée au-delà d'une position à partir de laquelle la lame ressort ne se trouve plus en appui sur la barre de tirage et empêche par la suite le repli de la toile du store. Cette butée peut être obtenue, par exemple, par pliage de l'extrémité de la lame souple dans la direction de la position de la barre de tirage ou en guidant les extrémités de la barre de tirage dans une rainure réalisée dans la surface de la lame ressort.

La technique de l'invention permet donc d'obtenir une surface d'occultation importante, ce qui est notamment intéressant pour occulter la surface d'une vitre latérale, mais également, comme illustré en figure 4A, une partie d'un pavillon vitré. Dans ce cas, le pare-soleil est ramené dans une position de repos 41, dans laquelle il est sensiblement horizontal.

La toile peut ensuite être déployée 42 parallèlement au pavillon.

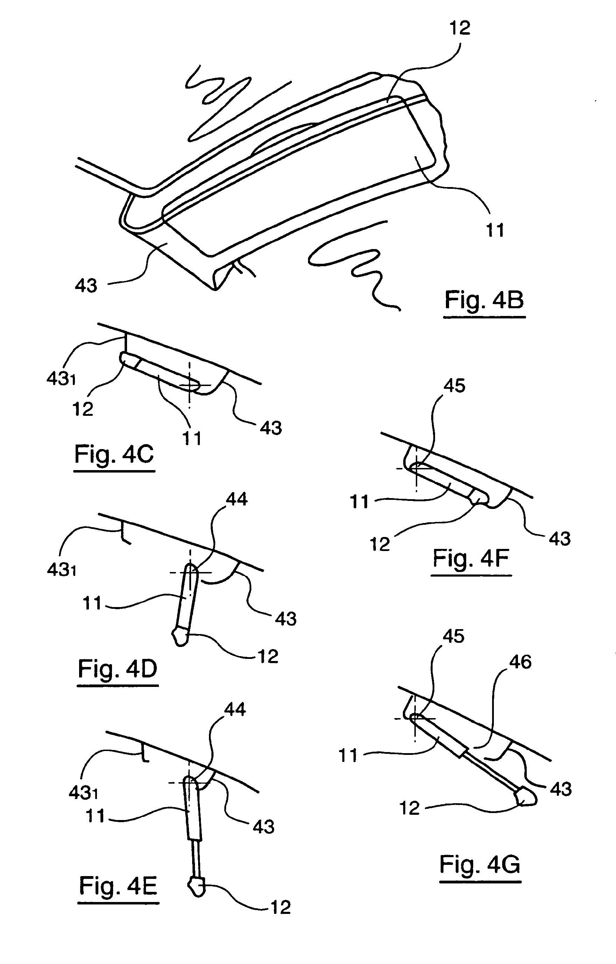

Dans un autre mode de réalisation particulier de l'invention, illustré figure 4B, la palette pare-soleil est intégrée dans la garniture 43 de la traverse dans la position de repos, sa surface visible affleurant la surface extérieure de la garniture.

La palette montée sur des paliers (non représentés) se décroche à partir du bord 43₁ de la traverse le plus éloigné du pare-brise, la barre de tirage étant clippée sur le bord saillant 43₁ de la garniture comme présenté figure 4C.

Une fois la palette libérée, la cassette 11 peut pivoter autour de l'axe 44 en direction du pare-brise jusqu'à par exemple une position déployée sensiblement verticale (présentée figure 4D) et/ou être au contact de la surface interne pare-brise (voir figure 4E).

L'extension en largeur de la palette se règle en tirant la barre de tirage 12 vers le bas jusqu'à la position souhaitée.

Dans une variante de ce mode de réalisation particulier, illustré figure 4F, la barre de tirage de la palette est dirigée en position de repos à l'inverse du mode précédent, soit vers le pare-brise, et se déploie en direction de l'occupant en pivotant autour de l'axe de rotation 45, placé près du bord saillant 43₁.

En référence à la figure 4G, la palette extraite du logement 46 prévu dans la garniture 43 de la traverse peut être agrandie en tirant la barre de tirage 12 vers le bas.

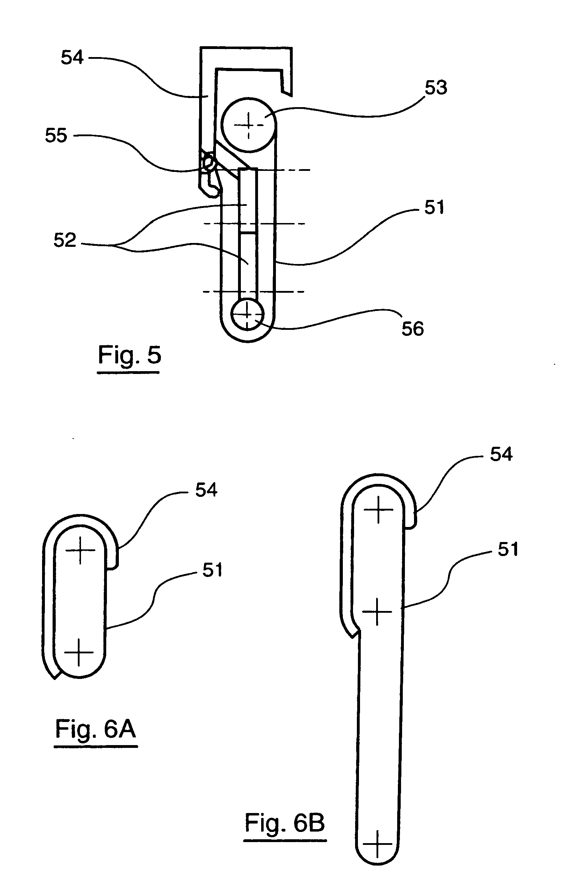

La figure 5 illustre un autre mode de réalisation de l'invention, en coupe. Dans certains cas, il peut être souhaitable que les éléments d'équilibrage (compas 16A, 16B ; figure 1B) ne soient pas visibles, pour des raisons d'esthétique.

Selon la solution illustrée à la figure 2, la toile d'occultation 51 est déployée en double épaisseur, de part et d'autre des biellettes 52, ou plus généralement de tout autre mécanisme.

Pour ce faire, la toile 51 est maintenue, classiquement, par une de ses extrémités, au tube enrouleur 53, et par son autre extrémité à la cassette 54, par un point de fixation 55 prévu à cet effet. La toile circule autour d'un rouleau 56 (fixe ou tournant) monté dans la barre de tirage. La toile 51 circule autour de ce rouleau 56, de façon qu'elle se déploie en double épaisseur, le mécanisme à biellettes 52 restant dissimulé entre les deux épaisseurs de la toile.

Les figures 6A et 6B donnent un exemple de mise en oeuvre du système de la figure 5. La cassette 54 est peinte, ou revêtue d'un revêtement adapté à l'habitacle du véhicule. Vu de l'intérieur, une portion de la toile 51 reste visible. Lorsque cette toile est déployée (figure 6B), la portion de tissu visible augmente. Cette surface 61 peut, le cas échéant, porter un marquage sur le tissu, visible uniquement lorsque la toile est dépliée.

L'invention offre ainsi l'avantage d'une palette pare-soleil réglable, formant toujours une palette minimale, et pouvant offrir trois déplacements (rotation frontale, rotation latérale et déploiement vertical ou horizontal) pour un réglage optimal.

On obtient ainsi un dispositif présentant des dimensions d'occultation adaptables en frontal et en latéral, avec un encombrement réduit, en position repliée. L'invention permet de conserver la double rotation des palettes pare-soleil, avec une bonne ergonomie, et en particulier une rétractation rapide de la toile.

## Revendications

1. Palette pare-soleil pour pare-brise de véhicule automobile, comprenant un store à enrouleur comprenant une toile d'occultation (15) montée sur un tube enrouleur (21) et entraînée par une barre de tirage (12), **caractérisé en ce que** le tube enrouleur est logé dans une cassette (11),
et **en ce que** ladite cassette et ladite barre de tirage ont des formes adaptées conçues de façon à s'emboîter l'une dans l'autre pour former une palette pare-soleil minimale, lorsque ladite toile est repliée.

2. Palette pare-soleil selon la revendication 1, **caractérisée en ce qu'**elle comprend des moyens d'équilibrage (16A, 16B) du déplacement de ladite barre de tirage, et **en ce que** ladite cassette et ladite barre de tirage définissent un logement pour lesdits moyens d'équilibrage, lorsque ladite toile est repliée.

3. Palette pare-soleil selon la revendication 2, **caractérisée en ce que** lesdits moyens d'équilibrage comprennent deux compas (16A, 16B), reliant chacun ladite barre de tirage à ladite cassette.

4. Palette pare-soleil selon l'une quelconque des revendications 1 à 3, **caractérisée en ce qu'**elle comprend au moins un élément raidisseur élastique (36) solidaire de ladite cassette et coopérant avec ladite barre de tirage de façon à retenir ladite barre lorsque ladite toile est déployée.

5. Palette pare-soleil selon la revendication 4, **caractérisée en ce que** ledit au moins un élément raidisseur élastique est une lame ressort (36).

6. Palette pare-soleil selon l'une quelconque des revendications 1 et 5, **caractérisée en ce que** ladite cassette peut être reliée audit véhicule par l'intermédiaire d'une rotule (14).

7. Palette pare-soleil selon l'une quelconque des revendications 1 à 6, **caractérisée en ce que** ladite toile d'occultation est reliée par une extrémité au tube enrouleur et par l'autre extrémité à ladite cassette, et circule autour d'un rouleau (56) solidaire de ladite barre de tirage, de façon à présenter ladite toile en double épaisseur.

8. Palette pare-soleil selon l'une quelconque des revendications 1 à 7, **caractérisée en ce que** ladite toile peut être déployée :
- sensiblement verticalement, pour occulter la partie supérieure dudit pare-brise ;
- sensiblement horizontalement, pour occulter une portion vitrée d'un pavillon.

9. Palette pare-soleil selon l'une quelconque des revendications 1 à 8, **caractérisée en ce que** l'épaisseur de ladite palette pare-soleil est comprise entre 8 et 10 mm, de façon à ce que ladite palette, dans une position de repos, puisse être sensiblement affleurante à la traverse placée à l'avant du pavillon du véhicule, et **en ce que** ladite palette peut être déployée par pivotement vers l'avant dudit véhicule automobile.

10. Palette pare-soleil selon l'une quelconque des revendications 1 à 8, **caractérisée en ce que** l'épaisseur de ladite palette pare-soleil est comprise entre 8 et 10 mm, de façon à ce que ladite palette dans une position de repos puisse être sensiblement affleurante à la traverse placée à l'avant du pavillon du véhicule, et **en ce que** ladite palette peut être déployée par pivotement vers l'arrière dudit véhicule automobile.

11. Véhicule automobile comprenant au moins une palette pare-soleil pour pare-brise, la ou lesdites palettes comprenant chacune un store à enrouleur comprenant une toile d'occultation (15) montée sur un tube enrouleur (21) et entraînée par une barre de tirage (12), **caractérisé en ce que** le tube enrouleur est logé dans une cassette (11), et **en ce que** ladite cassette et ladite barre de tirage ont des formes adaptées conçues de façon à s'emboîter l'une dans l'autre pour former une palette pare-soleil minimale, lorsque ladite toile est repliée.

## Claims

1. A sun visor for an automobile windshield, comprising a roller blind comprising a shading fabric (15) mounted on a winding shaft (21) and driven by a pull bar (12), **characterized in that** the winding shaft is housed in a box (11), and **in that** said box and said pull bar have adapted forms designed so as to fit one inside the other to form a minimal sun visor, when said blind is folded.

2. The sun visor according to claim 1, **characterized in that** it comprises means for balancing (16A, 16B) the displacement of said pull bar and **in that** said box and said pull bar define a housing for said balancing means, when said fabric is folded.

3. The sun visor according to claim 2, **characterized in that** said balancing means comprise two dividers (16A, 16B), each connecting said pull bar to said box.

4. The sun visor according to any one of claims 1 to 3, **characterized in that** it comprises at least one elastic stiffener element (36) integral with said box and cooperating with said pull bar so as to retain said bar when said fabric is deployed.

5. The sun visor according to claim 4, **characterized in that** said at least one elastic stiffener element is a leaf spring (36).

6. The sun visor according to any one of claims 1 and 5, **characterized in that** said box may be connected to said vehicle through a ball joint (14).

7. The sun visor according to any one of claims 1 to 6, **characterized in that** said shading fabric is connected by one end to the winding shaft and by the other end to said box, and circulates around a roller (56) integral with said pull bar, so as to present said fabric in a double thickness.

8. The sun visor according to any one of claims 1 to 7, **characterized in that** said fabric may be deployed:
- substantially vertically, to shade the upper part of said windshield;
- substantially horizontally, to shade a glass portion of a sun roof.

9. The sun visor according to any one of claims 1 to 8, **characterized in that** the thickness of said sun visor is between 8 and 10 mm, so that, in a position of rest, it may be substantially flush with the cross piece placed at the front of the vehicle roof, and **in that** it may be deployed by pivoting towards the front of said automobile.

10. The sun visor according to any one of claims 1 to 8, **characterized in that** the thickness of said sun visor is between 8 and 10 mm, so that, in a position of rest, it may be substantially flush with the cross piece placed at the front of the vehicle roof, and **in that** it may be deployed by pivoting towards the rear of said automobile.

11. An automobile comprising at least one sun visor for a windshield, said sun visor or sun visors each comprising a roller blind comprising a shading fabric (15) mounted on a winding shaft (21) and driven by a pull bar (12), **characterized in that** the winding shaft is housed in a box (11) and **in that** said box and said pull bar have adapted forms designed so as to fit one inside the other to form a minimal sun visor, when said fabric is folded.

## Patentansprüche

1. Sonnenblende für Kraftfahrzeugwindschutzscheibe, die ein Rollo aufweist, der ein Verdunkelungstuch (15) aufweist, das auf eine Wickelwelle (21) montiert ist und von einer Zugstange (12) angetrieben wird, **dadurch gekennzeichnet, dass** die Wickelwelle in einer Kassette (11) untergebracht ist, und dass die Kassette und die Zugstange geeignete Formen haben, die so konzipiert sind, dass sie sich ineinander verschachteln, um eine minimale Sonnenblende zu bilden, wenn das Tuch eingezogen ist.

2. Sonnenblende nach Anspruch 1, **dadurch gekennzeichnet, dass** sie Mittel (16A, 16B) zum Ausgleichen der Bewegung der Zugstange aufweist, und dass die Kassette und die Zugstange eine Aufnahme für die Ausgleichsmittel bilden, wenn das Tuch eingezogen ist.

3. Sonnenblende nach Anspruch 2, **dadurch gekennzeichnet, dass** die Ausgleichsmittel zwei Zirkel (16A, 16B) aufweisen, die jeweils die Zugstange mit der Kassette verbinden.

4. Sonnenblende nach einem der Ansprüche 1 bis 3, **dadurch gekennzeichnet, dass** sie mindestens ein elastisches Versteifungselement (36) aufweist, das mit der Kassette fest verbunden ist und mit der Zugstange derart zusammenwirkt, dass die Stange zurückgehalten wird, wenn das Tuch ausgezogen ist.

5. Sonnenblende nach Anspruch 4, **dadurch gekennzeichnet, dass** das mindestens ein elastisches Versteifungselement ein Federblatt (36) ist.

6. Sonnenblende nach einem der Ansprüche 1 und 5, **dadurch gekennzeichnet, dass** die Kassette mit dem Fahrzeug über ein Kugelgelenk (14) verbunden werden kann.

7. Sonnenblende nach einem der Ansprüche 1 bis 6, **dadurch gekennzeichnet, dass** das Verdunkelungstuch an einem Ende mit der Wickelwelle und an dem anderen Ende mit der Kassette verbunden ist und um eine Rolle (56) zirkuliert, die fest mit der Zugstange derart verbunden ist, dass das Tuch in doppelter Lage präsentiert wird.

8. Sonnenblende nach einem der Ansprüche 1 bis 7, **dadurch gekennzeichnet, dass** das Tuch:
- im Wesentlichen vertikal ausgezogen werden kann, um den oberen Teil der Windschutzscheibe zu verdunkeln ;
- im Wesentlichen horizontal ausgezogen werden kann, um einen verglasten Abschnitt eines Fahrzeughimmels zu verdunkeln.

9. Sonnenblende nach einem der Ansprüche 1 bis 8, **dadurch gekennzeichnet, dass** die Stärke der Sonnenblende zwischen 8 und 10 mm liegt, so dass die Sonnenblende in einer Ruhestellung im Wesentlichen mit dem Querbalken, der an der Vorderseite des Himmels des Fahrzeugs platziert ist, bündig sein kann, und dass die Sonnenblende durch Schwenken zur Vorderseite des Kraftfahrzeugs ausgezogen werden kann.

10. Sonnenblende nach einem der Ansprüche 1 bis 8, **dadurch gekennzeichnet, dass** die Stärke der Sonnenblende zwischen 8 und 10 mm liegt, so dass die Sonnenblende in einer Ruhestellung im Wesentlichen mit dem Querbalken, der an der Vorderseite des Himmels des Fahrzeugs platziert ist, bündig sein kann, und dass die Sonnenblende durch Schwenken zur Rückseite des Kraftfahrzeugs ausgezogen werden kann.

11. Kraftfahrzeug, das mindestens eine Sonnenblende für Windschutzscheibe aufweist, wobei die Sonnenblende(n) jeweils ein Rollo aufweist/aufweisen, der ein Verdunkelungstuch (15) aufweist, das auf eine Wickelwelle (21) montiert ist, das von einer Zugstange (12) angetrieben wird, **dadurch gekennzeichnet, dass** die Wickelwelle in einer Kassette (11) untergebracht ist und dass die Kassette und die Zugstange geeignete Formen haben, die derart konzipiert sind, dass sie sich ineinander verschachteln, um eine minimale Sonnenblende zu bilden, wenn das Tuch eingezogen ist.
